# EUROPÄISCHE PATENTSCHRIFT

(11) **EP 3 606 858 B1**
(45) Veröffentlichungstag und Bekanntmachung des Hinweises auf die Patenterteilung: **09.06.2021**
(21) Anmeldenummer: 18715696.3
(22) Anmeldetag: 04.04.2018
(51) Int. Cl.: F16B 1/00, F16B 19/02, B66C 1/10, B66C 1/66

(54) **KOPPLUNGSVORRICHTUNG, HEBEANORDNUNG UND JUSTIER-VERFAHREN FÜR EINE KOPPLUNGSVORRICHTUNG**
COUPLING DEVICE, LIFTING ASSEMBLY AND ADJUSTING METHOD FOR A COUPLING DEVICE
DISPOSITIF DE COUPLAGE, ENSEMBLE DE LEVAGE ET PROCÉDÉ D'AJUSTEMENT POUR UN DISPOSITIF DE COUPLAGE

(30) Priorität: 05.04.2017 AT 502772017
(43) Veröffentlichungstag der Anmeldung: 12.02.2020
(73) Patentinhaber: TMS Turnkey Manufacturing Solutions GmbH, 4031 Linz (AT)
(72) Erfinder: HOLZER, Erwin, 4311 Schwertberg (AT); MAYRHOFER, Christoph, 4141 Pfarrkirchen (AT)
(74) Vertreter: Patentanwälte Pinter & Weiss OG
(86) Internationale Anmeldenummer: PCT/EP2018/058624
(87) Internationale Veröffentlichungsnummer: WO 2018/185172

(56) Entgegenhaltungen:
- WO-A1-2011/078792
- WO-A1-2014/114374
- US-A- 5 167 464

## Beschreibung

Die gegenständliche Erfindung betrifft eine Kopplungsvorrichtung mit zumindest einem Vorrichtungsoberteil und zumindest einem Vorrichtungsunterteil, wobei das Vorrichtungsoberteil und das Vorrichtungsunterteil lösbar koppelbar sind, wobei die Kopplungsvorrichtung mindestens zwei Koppelelemente mit jeweils einem Koppelelementoberteil und einem Koppelelementunterteil aufweist, wobei die zumindest zwei Koppelelementoberteile ortsfest am Vorrichtungsoberteil angeordnet sind und die zumindest zwei Koppelelementunterteile am Vorrichtungsunterteil angeordnet sind sowie eine Hebeanordnung mit einer Hebeeinrichtung und einem zu hebenden Objekt und ein Verfahren zur Justierung einer Kopplungsvorrichtung.

Hebeeinrichtungen kommen in vielfältigsten Varianten und in vielfältigsten Anwendungen zum Einsatz. Hebeeinrichtungen können in Form von Kränen, wie z.B. als Portalkran, Brückenkran, Turmkran, Mobilkran etc., oder auch in Form von Handhabungseinrichtungen, wie z.B. Robotern, zur Anwendung kommen. Dabei können viele verschiedene Objekte manipuliert bzw. bewegt und von einem Ort an einen anderen Ort transportiert werden. Diese Objekte können ebenfalls vielfältigste Ausprägung haben, angefangen von sehr leichten Kleinstbauteilen bis hin zu sehr schweren Objekten, wie z.B. Presswerkzeugen für Stahlkarosserien für Fahrzeuge oder ähnliches. Hebeeinrichtungen können manuell durch Personen bedient werden, werden aber in zunehmendem Maße auch in automatisierten Prozessen angewendet, beispielsweise bei Produktionsprozessen von Fahrzeugen. Die Anbindung der zu hebenden Objekte an die Hebeeinrichtung spielt insbesondere bei automatisierten Prozessen eine entscheidende Rolle, bei denen etwaige Positionsabweichungen zwischen Hebeeinrichtung und Objekt, anders als bei vom Menschen gesteuerten Prozessen, nicht durch den Benutzer wie z.B. einen erfahrenen Kranführer kompensiert werden können. Deshalb ist es bei automatisierten Manipulations-Prozessen notwendig, die Position der Hebeeinrichtung und die Position des zu hebende Objektes sehr präzise aufeinander abzustimmen, um immer gleich sichere und reproduzierbare Hebevorgänge und damit einen möglichst störungsfreien Betrieb gewährleisten zu können. Das erfordert in der Regel eine exakte Justierung der Hebeeinrichtung, was in der Praxis durchaus aufwendig sein kann. Um die Wirtschaftlichkeit eines Produktionsprozesses zu erhöhen, kann z.B. die Taktzeit einer Bearbeitungsstation verkürzt werden, weshalb es oftmals erforderlich bzw. gewünscht ist, gewisse Manipulationsvorgänge in immer kürzerer Zeit durchzuführen. Dies führt zur Forderung nach immer höheren Beschleunigungen und Geschwindigkeiten von Hebeeinrichtungen, was wiederum zu höher Belastung der Hebeeinrichtung führt, insbesondere zu höheren Belastungen im Bereich der Kopplung des zu hebenden Objektes an die Hebeeinrichtung.

Das Dokument AT 517515 A2 zeigt beispielsweise eine flexible Fügeanlage für Fahrzeugkarosserien mit einer Fügestation und einem Spannrahmen. Um verschiedene Karosseriemodelle in einer Fügestation bearbeiten zu können, müssen verschiedene Spannrahmen von einer Hebeeinrichtung bereitgestellt werden. In diesem Fall ist die Hebeeinrichtung durch einen Portalkran ausgeführt, der den Spannrahmen an einem zentralen Punkt des Spannrahmens aufnehmen und bewegen kann. Nachteilig ist hierbei, dass die Verbindung zwischen Spannrahmen und Portalkran nur mittels eines einzigen Koppelelements erfolgt, welches zentral am Spannrahmen angeordnet ist. Durch diese Ausführung können keine hohen Beschleunigungen bzw. Verzögerungen des Portalkrans erfolgen, da die dabei im Koppelelement auftretenden hohen Kräfte und Drehmomente nur unzureichend aufgenommen und in den Portalkran abgeleitet werden können. Oder das Koppelelement muss sehr groß dimensioniert werden, was ebenfalls nachteilig wäre. Zudem ist der Angriffspunkt der Hebeeinrichtung am Spannrahmen sehr zentral gewählt, um keine statischen Drehmomente, bedingt durch die Gewichtskraft des Spannrahmens, in das Koppelelement einzuprägen. Ein weiter außen am Spannrahmen liegender Angriffspunkt der Hebeeinrichtung würde bei Anordnung eines einzigen Koppelelements unter Umständen zu unzulässig hohen Belastungen und Schäden am Koppelelement führen, da ein einziges Koppelelement Drehmomente nur unzureichend aufnehmen kann.

Die WO 2011/078792 A1 offenbart eine Hebeeinrichtung und ein Verfahren zum Koppeln eines Rahmens mit der Hebeeinrichtung. Zum Koppeln werden als Drehschloss ausgebildete Koppelelemente verwendet, wobei ein Zapfen in eine korrespondierende Öffnung eingeführt wird. Nachteilig ist allerdings die fehlende Einstellmöglichkeit der Koppelelemente zueinander.

Die WO 2014/114374 A1 zeigt eine Verbindungsvorrichtung für einen Containerkran mit einem Koppelelement, das ein Stopfenelement und ein Sockelelement aufweist. Für einen exakten Koppelvorgang ist eine Führung mit vier Führungselementen vorgesehen. Da nur ein Koppelement vorgesehen ist, weist die WO 2014/114374 A1 ähnliche Nachteile auf wie die oben genannte AT 517515 A2 Die US 5167464 A offenbart eine Kopplungsvorrichtung gemäß dem Oberbegriff des Anspruchs 1.

Demzufolge ist die Aufgabe der Erfindung, eine Kopplungsvorrichtung anzugeben, die geeignet ist, in einer Hebeanordnung eine Hebeeinrichtung mit einem zu hebenden Objekt zu koppeln und mit der die Nachteile des Standes der Technik beseitigt werden. Insbesondere soll eine einfach justierbare Kopplungsvorrichtung geschaffen werden, die auf verschiedensten Hebeeinrichtungen flexibel einsetzbar ist und mit Hilfe derer es möglich sein soll, große Lasten mit dynamischen Bewegungsabläufen zu manipulieren.

Erfindungsgemäß wird die Aufgabe dadurch gelöst, dass zumindest ein Koppelelementunterteil relativ zum Vorrichtungsunterteil verstellbar und lösbar am Vorrichtungsunterteil angeordnet ist. Durch die Anordnung mehrerer Koppelelemente ist es einerseits möglich größere Lasten zu heben und zu bewegen und andererseits können die hohen Beschleunigungskräfte und -momente infolge dynamischer Bewegungsabläufe der Hebeeinrichtung besser aufgenommen und in die Hebeeinrichtung abgeleitet werden.

Es ist vorteilhaft, wenn die Vorrichtung mindestens vier Koppelelemente aufweist. Dadurch kann entweder die zulässige Belastung weiter erhöht werden oder es können bei gleicher zulässiger Belastung kompaktere Koppelelemente verwendet werden. Insbesondere können durch die Anordnung von mindestens vier Koppelelementen die Beschleunigungskräfte bzw. -momente bei mehrdimensionalen dynamischen Bewegungsabläufen besser von der Kopplungsvorrichtung aufgenommen werden.

Wenn die Koppelelemente pneumatisch, elektrisch oder hydraulisch betätigbar sind können am freien Markt erhältliche Standard-Komponenten verwendet werden und es kann ein standardmäßiges Energieversorgungssystem (Druckluftsystem, Stromnetz, Hydrauliksystem) zum Öffnen und Lösen der Koppelelemente verwendet werden.

Gemäß einer besonders vorteilhaften Ausführung der Erfindung ist am Vorrichtungsoberteil ein Zentrierelement angeordnet und am Vorrichtungsunterteil ist eine Zentriermarkierung vorgesehen, wobei das Zentrierelement und Zentriermarkierung zur Zentrierung des Vorrichtungsoberteils am Vorrichtungsunterteil zusammenwirken. Dadurch wird zur Justierung der Kopplungsvorrichtung eine einfache Zentrierung des Vorrichtungsoberteils am Vorrichtungsunterteil ermöglicht.

Wenn am Vorrichtungsunterteil zumindest ein Verstellelement zur Verstellung des zumindest einen Koppelelementunterteils angeordnet ist wird eine einfache, gut dosierbare und reproduzierbare Verstellmöglichkeit für die Koppelelementunterteile geschaffen, wodurch eine schnelle und einfache Justierung der erfindungsgemäßen Kopplungsvorrichtung ermöglicht wird.

Erfindungsgemäß ist zur Lösung der Aufgabe weiters vorgesehen, dass zumindest ein Koppelelementunterteil relativ zum Vorrichtungsunterteil verstellbar und lösbar am Vorrichtungsunterteil angeordnet ist, wobei das Vorrichtungsoberteil ortsfest an der Hebeeinrichtung angeordnet ist und das Vorrichtungsunterteil ortsfest an dem zu hebenden Objekt angeordnet ist. Damit wird eine Hebeanordnung zum Heben und Manipulieren von Lasten in dynamischen Bewegungsvorgängen geschaffen.

Bevorzugterweise ist die Hebeeinrichtung ein Kran, insbesondere ein Portalkran. Dadurch ergeben sich vielfältige Einsatzgebiete, beispielsweise in Produktionsanlagen.

Wenn das zu hebende Objekt ein Spannrahmen ist, kann die Kopplungsvorrichtung bzw. die Hebeanordnung in einer Fügeanlage zur Herstellung von Fahrzeugkarosserien verwendet werden.

Bevorzugterweise weist die Kopplungsvorrichtung mindestens 4 Koppelelemente auf. Dadurch kann entweder die zulässige Belastung weiter erhöht werden oder es können bei gleicher zulässiger Belastung kompaktere Koppelelemente verwendet werden. Insbesondere können durch die Anordnung von mindestens 4 Koppelelementen die Beschleunigungskräfte bzw. -momente bei mehrdimensionalen dynamischen Bewegungsabläufen besser von der Kopplungsvorrichtung aufgenommen werden.

Wenn die Koppelelemente pneumatisch, elektrisch oder hydraulisch betätigbar sind können am freien Markt erhältliche Standard-Komponenten verwendet werden und es kann ein standardmäßiges Energieversorgungssystem (Druckluftsystem, Stromnetz, Hydrauliksystem) zum Öffnen und Lösen der Koppelelemente verwendet werden.

Gemäß einer vorteilhaften Ausführung der Erfindung weist das Vorrichtungsoberteil ein Zentrierelement auf und das Vorrichtungsunterteil weist eine Zentriermarkierung auf, wobei das Zentrierelement und die Zentriermarkierung zur Zentrierung des Vorrichtungsoberteils am Vorrichtungsunterteil zusammenwirken. Dadurch wird zur Justierung der Kopplungsvorrichtung eine einfache Zentrierung des Vorrichtungsoberteils am Vorrichtungsunterteil ermöglicht.

Wenn am Vorrichtungsunterteil zumindest ein Verstellelement zur Verstellung des zumindest einen verstellbaren Koppelelementunterteils angeordnet ist wird eine einfache, gut dosierbare und reproduzierbare Verstellmöglichkeit für das Koppelelementunterteil geschaffen, wodurch eine schnelle und einfache Justierung der erfindungsgemäßen Kopplungsvorrichtung ermöglicht wird.

Gemäß eines erfindungsgemäßen Justier-Verfahrens ist vorgesehen, dass zumindest ein Koppelelementunterteil relativ zum Vorrichtungsunterteil verstellbar und lösbar am Vorrichtungsunterteil angeordnet ist und dass zuerst das Vorrichtungsoberteil am Vorrichtungsunterteil zentriert wird, worauf das zumindest eine verstellbare Koppelelementunterteil vom Vorrichtungsunterteil gelöst wird und verstellt wird, sodass das zumindest eine verstellbare Koppelelementunterteil mit dem korrespondierenden Koppelelementoberteil koppelbar ist, worauf das zumindest eine verstellbare Koppelelementunterteil am Vorrichtungsunterteil fixiert wird. Mit diesem einfachen Verfahren wird es ermöglicht, das an die Hebeeinrichtung angeschlossene Vorrichtungsoberteil mit dem fix am Objekt angeordneten Vorrichtungsunterteil zu synchronisieren. Damit wird sichergestellt, dass alle Koppelelementunterteile so ausgerichtet werden, dass sie bei jedem Kopplungsvorgang mit ihren korrespondierenden Koppelelementoberteilen sicher gekoppelt werden können.

Es ist vorteilhaft, wenn das Vorrichtungsoberteil mittels eines am Vorrichtungsoberteil anordenbaren Zentrierelements auf einer am Vorrichtungsunterteil angeordneten Zentriermarkierung zentriert wird. Dadurch wird die Durchführung des Verfahrens erleichtert, da eine einfache Zentriermöglichkeit geschaffen wird, indem die Hebeeinrichtung so positioniert wird, dass das am Vorrichtungsoberteil angeordnete Zentrierelement mit der am Vorrichtungsunterteil angeordneten Zentriermarkierung korrespondiert.

Gemäß einer weiteren vorteilhaften Ausgestaltung des erfindungsgemäßen Verfahrens wird das zumindest eine verstellbare Koppelelementunterteil mittels des zumindest einen am Vorrichtungsunterteil angeordneten Verstellelements verstellt. Dadurch wird es ermöglicht, das Koppelelementunterteil sehr einfach, leicht zugänglich und präzise zu verstellen und es wird eine, für mehrere Verstellvorgänge gut reproduzierbare Verstellmöglichkeit geschaffen.

Gemäß einer besonders bevorzugten Ausführungsform des Verfahrens wird an zumindest einem Koppelelementoberteil ein Zentrierhülsenoberteil verschiebbar angeordnet und am zumindest einen korrespondierenden Koppelelementunterteil wird ein mit dem Zentrierhülsenoberteil korrespondierender Zentrierhülsenunterteil angeordnet, worauf das zumindest eine verstellbare Koppelelementunterteil solange verstellt wird, bis das Zentrierhülsenoberteil allein aufgrund der Schwerkraft in das korrespondierende Zentrierhülsenunterteil gleitet. Dadurch ist es möglich, das Koppelelementoberteile und das Koppelelementunterteil in wenigen sehr einfachen Arbeitsschritten sehr präzise aufeinander abzustimmen.

Bevorzugterweise wird das Vorrichtungsoberteil ortsfest an einer Hebeeinrichtung, insbesondere an einem Portalkran angeordnet und das Vorrichtungsunterteil wird ortsfest an einem Objekt, insbesondere an einem Spannrahmen angeordnet. Dadurch kann das Justier-verfahren auch in Produktionsanlagen wie z.B. Fügeanlagen für Fahrzeugkarosserien angewendet werden.

Die gegenständliche Erfindung wird nachfolgend unter Bezugnahme auf die Figuren 1 bis 3 näher erläutert, die beispielhaft, schematisch und nicht einschränkend vorteilhafte Ausgestaltungen der Erfindung zeigen. Dabei zeigt
Fig.1 die erfindungsgemäße Kopplungsvorrichtung in einer bevorzugten Ausführungsform
Fig.2 die erfindungsgemäße Hebeanlage mit einer bevorzugten Ausführungsform der Kopplungsvorrichtung bei Anwendung in einer Fügeanlage
Fig.3a bis Fig.3c zeigen ausschnittsweise eine Kopplungsvorrichtung bei Durchführung des erfindungsgemäßen Justierungs-Verfahrens.

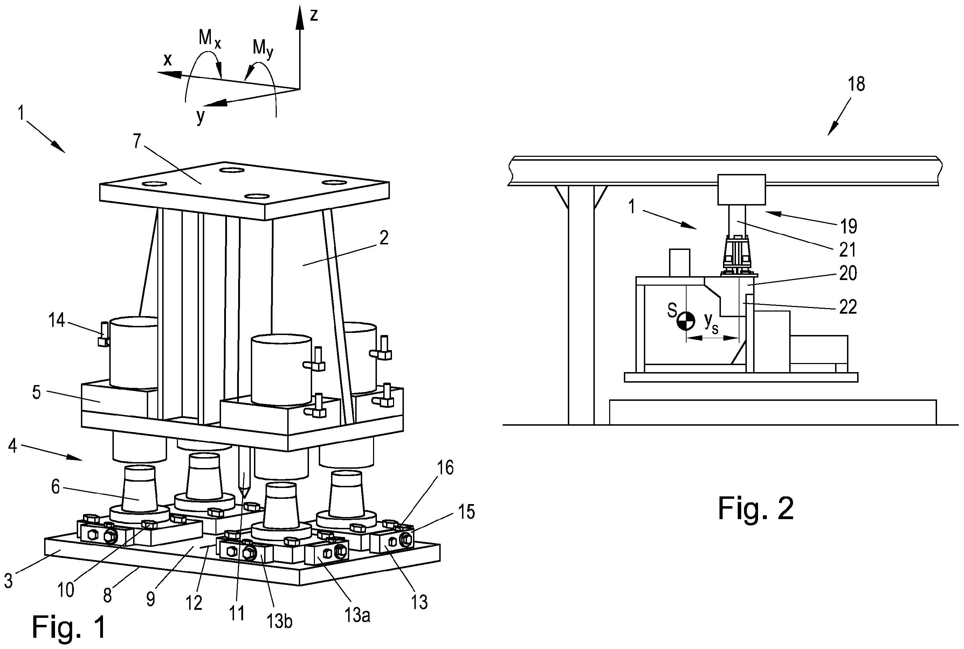

Fig.1 zeigt eine erfindungsgemäße Kopplungsvorrichtung 1, welche zumindest ein Vorrichtungsoberteil 2 und ein Vorrichtungsunterteil 3 aufweist. Die Bezeichnungen "Oberteil" und "Unterteil" bezeichnen keine bestimmte Orientierung oder Anordnung der beiden Teile, sondern dienen lediglich der Unterscheidung. Das Vorrichtungsoberteil 2 kann mittels eines Adapterteils 7 ortsfest an einer Hebeeinrichtung 19 angeordnet werden und das Vorrichtungsunterteil 3 kann mittels eines Anschlussteils 8 ortsfest an einem Objekt 20 angeordnet werden (aus Gründen der Übersichtlichkeit sind die Hebeeinrichtung 19 und Objekt 20 in Fig.1 nicht dargestellt), wobei die Anordnung auch umgekehrt sein könnte. Der Adapterteil 7 und der Anschlussteil 8 können dabei an die Gegebenheiten der jeweiligen Anordnung angepasst werden. Das Vorrichtungsoberteil 2 und das Vorrichtungsunterteil 3 sind vorteilhafterweise aus einem hochfesten, mechanisch bearbeitbaren Material ausgeführt, beispielsweise aus Stahl. Bevorzugterweise ist das Vorrichtungsoberteil 2 als Schweißkonstruktion ausgeführt, es wären aber auch andere Ausführungsformen denkbar, wie z.B. eine gebaute Konstruktion, die aus einzelnen Komponenten bestehen kann, die lösbar miteinander verbunden sind. Die konkrete Ausgestaltung des Vorrichtungsoberteils 2 muss jedenfalls so ausgeführt sein, dass die Aufnahme der zu erwartenden Kräfte und Drehmomente vom Vorrichtungsunterteil 3 und die Übertragung derselben auf die Hebeeinrichtung 19 sicher gewährleistet werden kann.

Zur lösbaren Koppelung des Vorrichtungsoberteils 2 mit dem Vorrichtungsunterteil 3 weist die Kopplungsvorrichtung 1 zumindest zwei Koppelelemente 4 auf, wobei ein Koppelelement 4 wiederum einen Koppelelementoberteil 5 und einen Koppelelementunterteil 6 aufweist. Durch die Anordnung von mindestens zwei Koppelelementen 4 können mit der Hebeeinrichtung 19 höhere Lasten gehoben bzw. bewegt werden und es können dynamischere Bewegungsvorgänge mit der Hebeeinrichtung 19 durchgeführt werden, da die Kräfte und Drehmomente, die bei Beschleunigungs- und Verzögerungsvorgängen der Hebeeinrichtung 19 entstehen, besser von der erfindungsgemäßen Kopplungsvorrichtung 1 aufgenommen und in die Hebeeinrichtung 19 abgeleitet werden können.

Erfindungsgemäß sind die zumindest zwei Koppelelementoberteile 5 (der zumindest zwei Koppelelemente 4) ortsfest am Vorrichtungsoberteil 2 angeordnet und die zugehörigen zumindest zwei Koppelelementunterteile 6 sind am Vorrichtungsunterteil 3 angeordnet, wobei zumindest ein Koppelelementunterteil 6 relativ zum Vorrichtungsunterteil 3 verstellbar und lösbar am Vorrichtungsunterteil 3 angeordnet ist. Es ist auch möglich, dass ein erstes Koppelelementunterteil 6 fest, also nicht verstellbar am Vorrichtungsunterteil 3 angeordnet ist und ein zweites Koppelelementunterteil 6 verstellbar am Vorrichtungsunterteil 3 angeordnet ist. Vorzugsweise ist das zumindest eine verstellbare Koppelelementunterteil 6 auf einer ebenen Justierfläche 9 des Vorrichtungsunterteils 3 mittels Befestigungselementen 10, wie z.B. Schrauben, lösbar befestigt. Die Justierfläche 9 kann dabei eine ebene Fläche sein, es wäre aber auch denkbar, dass das Koppelelementunterteil 6 verstellbar in Vertiefungen, Nuten, Schienen oder dergleichen angeordnet ist, wichtig ist dabei, dass das verstellbare Koppelelementunterteil 6 relativ zum Vorrichtungsunterteil 3 verstellbar ist. Verstellbar bedeutet in diesem Zusammenhang, dass das verstellbare Koppelelementunterteil 6 in zumindest einer Richtungen relativ zum Vorrichtungsunterteil 3 verschoben werden kann, bevorzugt in zwei Richtungen, besonders bevorzugt in Richtung zwei orthogonal aufeinander stehenden Achsen wie in Fig.1 durch die X-Achse und die Y-Achse symbolisiert ist. Diese Verstellmöglichkeit ist notwendig, um das verstellbare Koppelelementunterteil 6 zur Justierung mit dem korrespondierenden Koppelelementoberteil 5 zu zentrieren, sodass eine sichere Kopplung gewährleistet werden kann bzw. überhaupt eine Kopplung möglich ist. Wenn die Positionen der Koppelelemente 4 einmal aufeinander abgestimmt sind, können ohne weitere Einstellmaßnahmen beliebig wiederholbare Kopplungsvorgänge durchgeführt werden und eine gleichbleibende sichere Kopplung der Koppelelementoberteile 5 und der korrespondierenden Koppelelementunterteile 6 kann gewährleistet werden.

Es wäre zwar denkbar, auf die erfindungsgemäße Verstellbarkeit des zumindest einen Koppelelementunterteils 6 zu verzichten und die Koppelelementunterteile 6 exakt und ortsfest am Vorrichtungsunterteil 3 anzuordnen (analog der Koppelelementoberteile 5 am Vorrichtungsoberteil 2), allerdings wäre eine genaue Positionsabstimmung der Koppelelemente 4, die für einen sicheren Koppelvorgang erforderlich ist, aufgrund von Bauteil- und Fertigungstoleranzen nur sehr schwer realisierbar bzw. wäre dies nur mittels Präzisionsfertigung machbar, was einen sehr hohen Kostenaufwand bedeuten würde.

Bei 2-dimensionalen Bewegungsabläufen der Hebeeinrichtung 19, beispielsweise Heben und Senken in Richtung der Z- Achse und Verfahren beispielsweise in Richtung einer Achse (Y-Achse oder X-Achse) könnte es ausreichend sein, zwei Koppelelemente 4 an der Kopplungsvorrichtung 1 vorzusehen, weil die dynamischen Kräfte insbesondere in Richtung der Z-Achse wirken und die, aus Beschleunigungsvorgängen (was natürlich auch eine Verzögerung umfasst) der Hebeeinrichtung 19 resultierenden, dynamischen Drehmomente insbesondere nur um eine Achse wirken. Bei Verfahren der Hebeeinrichtung 19 in der Z-Y-Ebene würde bei Beschleunigungsvorgängen beispielsweise ein Drehmoment Mₓ um die X-Achse resultieren, bei Verfahren der Hebeeinrichtung 19 in der Z-X-Ebene ein Drehmoment M_{y} um die Y-Achse. Oftmals findet allerdings ein 3-dimensionaler dynamischer Bewegungsvorgang der Hebeeinrichtung 19 statt, z.B. Heben und Senken in Richtung der Z-Achse und Verfahren in Richtung der X-Achse und der Y-Achse. Dadurch entstehen neben den Kräften vorwiegend in Richtung der Z-Achse sowohl Drehmomente Mₓ um die X-Achse als auch Drehmomente M_{y} um die Y-Achse. Gemäß einer vorteilhaften Ausführungsform der erfindungsgemäßen Kopplungsvorrichtung 1 sind deshalb zumindest vier Koppelelemente 4 an der Kopplungsvorrichtung 1 vorgesehen, wodurch die genannten Kräfte und Drehmomente, die aus dem dynamischen Bewegungsvorgang der Hebeeinrichtung 19 resultieren, besser von der Kopplungsvorrichtung 1 aufgenommen und in die Hebeeinrichtung 19 abgeleitet werden können. Bevorzugterweise sind alle vier Koppelelementunterteile 6 verstellbar am Vorrichtungsunterteil 3 lösbar angeordnet, wie in Fig.1 dargestellt, es wäre aber auch denkbar, weniger als vier Koppelelementunterteile 6 verstellbar auszuführen. Beispielsweise könnte die Zentrierung des Vorrichtungsoberteils 2 am Vorrichtungsunterteil 3 mittels eines ortsfest am Vorrichtungsoberteil 2 angeordneten Koppelelementoberteils 5 und eines ortsfest am Vorrichtungsunterteil 3 angeordneten Koppelelementunterteils 6 durchgeführt werden, wobei die restlichen Koppelelementunterteile 6 verstellbar ausgeführt sein können, um auf ihre korrespondierenden, am Vorrichtungsoberteil 2 ortsfest angeordneten Koppelelementoberteile 5, angepasst werden zu können. Es sind aber auch beliebige andere Kombinationen von ortsfesten und verstellbaren Koppelelementunterteilen 6 denkbar.

Ein zusätzlicher Vorteil bei Anordnung mehrerer Koppelelemente 4 an der Kopplungsvorrichtung 1 kann auch in der Erhöhung der Ausfallsicherheit der Kopplungsvorrichtung 1 gesehen werden, insbesondere wenn Koppelelemente 4 redundant ausgeführt sind. Eine Anordnung mehrerer Koppelelemente 4 könnte aber auch zu einer Erhöhung der Arbeitssicherheit führen, beispielsweise wenn Objekte 20 mittels einer Hebeeinrichtung 19 (z.B. eines Portalkrans) über Personen bewegt werden.

Ein Koppelelement 4, und die Teile davon, können grundsätzlich beliebig ausgeführt sein. Wesentlich ist, dass ein Koppelelementoberteil 5 und ein Koppelelementunterteil 6 voneinander lösbar sind und dass damit die zu erwartenden Kräfte und Drehmomenten aufgenommen werden können. Die Lösbarkeit von Koppelelementoberteil 5 und Koppelelementunterteil 6 ist vorzugsweise steuerbar und umfasst vorzugsweise einen Koppelungsantrieb, um den Koppelelementoberteil 5 und den Koppelelementunterteil 6 zu koppeln oder zu lösen. Grundsätzlich ist hierfür jeder beliebige Antrieb denkbar, insbesondere ein hydraulischer, pneumatischer, elektrischer, elektromagnetischer, usw. Antrieb. Solche Koppelelemente 4 sind auch kommerziell in verschiedensten Ausführungen erhältlich.

Gemäß einer besonders vorteilhaften Ausführungsform der erfindungsgemäßen Kopplungsvorrichtung 1 sind die Koppelelemente 4 pneumatisch betätigbar und sind Standardkomponenten, wie beispielsweise Spanneinheiten der Fa. CyTec Zylindertechnik. Zum Verbinden der Koppelelemente 4 mit dem Koppelungsantrieb können dazu z.B. Druckluftanschlüsse 14 an den Koppelelementobererteilen 5 angeordnet sein. Ein Vorteil der pneumatischen Betätigung ist, dass eine vorhandene Druckluftversorgungsanlage zur Betätigung der Koppelelemente 4 verwendet werden kann. Solche Druckluftversorgungsanlagen sind weit verbreitet und gehören beispielsweise zur Standardausrüstung in Produktions- und Fertigungsanlagen. Ein weiterer Vorteil ist auch, dass im Falle einer Leckage der Koppelelemente 4 nur Luft entweicht und kein flüssiges Medium austreten kann, wie beispielsweise bei hydraulisch betätigbaren Koppelelementen 4, wodurch es zu keiner Verschmutzung der Kopplungsvorrichtung 1, des zu bewegenden Objektes 20 oder negativen Einflüssen auf Personen durch Kontakt mit z.B. Hydraulikflüssigkeit kommen kann.

Ein weiterer Vorteil der pneumatischen Betätigung der Koppelelemente 4 ist, dass die je nach Anwendungsgebiet der Kopplungsvorrichtung 1 unterschiedlich strengen Sicherheitsvorschriften ohne großen Aufwand erfüllt werden können. Wenn z.B. eine Redundanz der Betätigung der Koppelelemente 4 erforderlich ist, können zwei voneinander unabhängige pneumatische Steuerkreise verwendet werden. Auch können erforderlichenfalls z.B. gekapselte Ventile verwendet werden oder eine redundante Abfrage realisiert sein, ob z.B. ein Koppelelement 4 gekoppelt ist oder nicht. Vorteilhafterweise sind die pneumatischen Koppelelemente 4 so ausgeführt, dass bei einem Ausfall der Versorgungsenergie bzw. der Druckluft kein Öffnen der Koppelelemente erfolgt, d.h. kein Entkoppeln von Koppelelementoberteil 5 und Koppelelementunterteil 6. Dadurch wird gewährleistet, dass sich ein Objekt 20 nicht plötzlich von der Hebeeinrichtung 19 bzw. das am Objekt 20 angeordnete Vorrichtungsunterteil 3 bei einem Ausfall der Versorgungsenergie nicht plötzlich vom Vorrichtungsoberteil 2 löst.

Trotz der Vorteile der pneumatischen Betätigung der Koppelelemente 4 sind aber auch andere Formen der Betätigung denkbar wie z.B. hydraulische, elektrische oder magnetische Betätigung, wobei natürlich auch bei diesen Formen der Betätigung ähnliche oder gleiche sicherheitsrelevanten Merkmale realisiert werden können.

Es ist vorteilhaft, wenn das Vorrichtungsoberteil 2 ein Zentrierelement 11 aufweist und das Vorrichtungsunterteil 3 eine Zentriermarkierung 12 aufweist. Das Zentrierelement 11 kann aber auch nur zum Zwecke der Justierung am Vorrichtungsoberteil 2 angeordnet werden und kann im normalen Betrieb entfernt werden. Dadurch wird eine einfache Möglichkeit der Zentrierung des Vorrichtungsoberteils 2 am Vorrichtungsunterteil 3 zum Zweck der Justierung der Koppelelementunterteile 6 ermöglicht. Das Zentrierelement 11 kann beispielsweise als ein länglicher Zentrierstab ausgeführt sein, der an seinem ersten Ende am Vorrichtungsoberteil befestigt wird und der an seinem zweiten Ende eine Zentrierspitze aufweist, die zum Zwecke der Zentrierung des Vorrichtungsoberteils 2 mit dem Vorrichtungsunterteil 3 auf eine Zentriermarkierung 12 positioniert wird, welche am Vorrichtungsunterteil 3 angeordnet ist. Die Zentriermarkierung 12 kann z.B. in Form eines Kreuzes durch mechanische Bearbeitung auf der Justierfläche 9 des Vorrichtungsunterteils 3 angeordnet werden. Beispielsweise könnte das Zentrierelement 11 auch als zylindrischer Stab ausgeführt sein, der am Vorrichtungsoberteil 2 angeordnet ist und die Zentriermarkierung 12 könnte als zylindrische Bohrung im Vorrichtungsunterteil 3 ausgeführt sein, wobei zur Zentrierung des Vorrichtungsoberteils 2 mit dem Vorrichtungsunterteil 3 das Vorrichtungsoberteil 2 so positioniert wird, dass der zylindrische Stab in die zylindrische Bohrung passt. Es ist aber auch jede andere Kombination von Zentrierelement 11 und Zentriermarkierung 12 denkbar.

Es ist besonders vorteilhaft, wenn am Vorrichtungsunterteil 3 zumindest ein Verstellelement 13 zur Verstellung des zumindest einen verstellbaren Koppelelementunterteils 6 angeordnet ist. Dadurch kann die oben beschriebene Verstellung des zumindest einen verstellbaren Koppelelementunterteils 6 bzw. eine Anpassung an das korrespondierende Koppelelementoberteil 5 sehr einfach und präzise durchgeführt werden. Es ist vorteilhaft, wenn für jedes verstellbare Koppelelementunterteil 6 zwei korrespondierende Verstellelemente 13 am Vorrichtungsunterteil 3 angeordnet sind. Beispielsweise kann ein erstes Verstellelement 13a für eine Verstellung des Koppelelementunterteils 6 in Richtung der X-Achse angeordnet sein und ein zweites Verstellelement 13b für eine Verstellung des Koppelelementunterteils 6 in Richtung der Y-Achse angeordnet sein, natürlich wäre aber auch eine andere Anzahl und andere Positionen von Verstellelementen 13 denkbar und es wären auch andere Verstellrichtungen möglich. Verstellelemente 13 können z.B. als Backen 15 ausgeführt sein, die entweder fest oder lösbar mit dem Vorrichtungsunterteil 3 verbunden sind. Fest bedeutet in diesem Zusammenhang z.B. mit dem Vorrichtungsunterteil 3 verschweißt, verklebt, verlötet etc. oder einteilig mit dem Vorrichtungsunterteil 3 ausgeführt, z.B. als Gussteil oder Frästeil. In der Ausführungsvariante gemäß Fig.1 sind die Backen 15 z.B. mittels lösbaren Befestigungselementen 16 am Vorrichtungsunterteil 3 befestigt. Lösbare Befestigungselemente 16 können beispielsweise Schrauben, Bolzen etc. sein. Zur Verstellung der Koppelelementunterteile 6 können beispielsweise zwischen einem Verstellelement 13 und einem Koppelelementunterteil 6 Distanzplättchen bestimmter Stärke angeordnet werden. Durch Anordnung verschiedener Distanzplättchen (auch mehrere Distanzplättchen) kann die gewünschte Position des verstellbaren Koppelelementunterteils 6 relativ zum Vorrichtungsunterteil 3 eingestellt werden. In den Verstellelementen 13 können aber auch Betätigungselemente 17 angeordnet sein. Ein Betätigungselement 17 kann z.B. eine Schraube sein, die in ein, im Verstellelement 13 bzw. Backen 15 angeordnetes Gewinde eingeschraubt wird und deren Ende in Kontakt mit einem Koppelelementunterteil 6 steht. Bei Drehung der Schraube erfolgt eine axiale Verschiebung der Schraube und folglich eine Verschiebung des entsprechenden Koppelelementunterteils 6. Verstellelemente 13 und Betätigungselemente 17 können aber auch in beliebig anderen Formen und Kombinationen ausgeführt sein, wichtig ist nur, dass eine Verstellung der Koppelelementunterteile 6 erwirkt wird.

Fig.2 zeigt die erfindungsgemäße Kopplungsvorrichtung 1 in einer bevorzugten Ausführungsform in bevorzugter Anwendung in einer Fügestation 18 eines Produktionsprozesses zur Fertigung von Fahrzeug-Karosserien. Dabei ist die Hebeeinrichtung 19 bevorzugt als Portalkran 21, insbesondere als automatisierter Portalkran, ausgeführt und das Objekt 20 ist als Spannrahmen 22 zur Aufnahme und Spannen von Karosserieteilen ausgeführt. Die Kopplungsvorrichtung 1 ist über den Adapterteil 7 des Vorrichtungsoberteils 2 ortsfest mit dem beweglichen Teil des Portalkrans 21 verbunden und mittels des Anschlussteils 8 des Vorrichtungsunterteils 3 ortsfest mit dem Spannrahmen 22 verbunden. Vorzugsweise ist die Verbindung des Vorrichtungsoberteils 2 mit der in Fig.2 als Portalkran 21 ausgeführten Hebeeinrichtung 19 lösbar ausgeführt, beispielsweise mit Schraubverbindungen. Die Verbindung könnte aber auch durch jede andere Art der Verbindung ausgeführt sein, z.B. durch Schweißen, Nieten, Kleben etc. Gleiches gilt für die Verbindung des Vorrichtungsunterteils 3 am Objekt 20, das in Fig.2 als Spannrahmen 22 ausgeführt ist. Bevorzugt kommen lösbare Schraubverbindungen zum Einsatz, wodurch die Kopplungsvorrichtung 1 flexibel einsetzbar ist und für Reparatur- und Wartungszwecke von der Hebeeinrichtung 19 demontiert werden kann. In der in Fig.2 dargestellten Position sind das Vorrichtungsoberteil 2 und das Vorrichtungsunterteil 3 mittels der Koppelelemente 4 miteinander gekoppelt. Durch lösen der Koppelelemente 4 kann das Objekt 20 von der Hebeeinrichtung 19 getrennt werden. Durch die genaue Justierung der Koppelelemente 4 kann die Hebeeinrichtung 19 die Position des gelösten Objektes 20 wieder exakt anfahren und das Objekt wieder aufnehmen, indem die Koppelelemente 4 wieder gekoppelt werden.

In der Ausführungsform der Kopplungsvorrichtung 1 in der Anwendung in einer Fügestation 18 gemäß Fig.2 sind als Koppelelemente 4 vier pneumatische Spanneinheiten der Fa. CyTec Zylindertechnik an der Kopplungsvorrichtung 1 angeordnet. Diese Spanneinheiten sind besonders vorteilhaft, da sie eine gewisse zulässige Toleranz sowohl bezüglich der Winkelgenauigkeit, als auch bezüglich der Positionsgenauigkeit aufweisen. Beispielsweise sind die in der Fügestation 18 gemäß Fig.2 als Koppelelemente 4 angeordneten Spanneinheiten in einer Größe ausgeführt, in der die zulässige Winkeltoleranz 2° und die zulässige radiale Toleranz 1,5mm betragen, wobei die Winkeltoleranz auf eine Winkelabweichung der Längsachse eines Koppelelementunterteils 6 zur Längsachse eines Koppelelementoberteils 5 bezogen ist und die radiale Toleranz auf eine Positionsabweichung der Längsachse eines Koppelelementunterteils 6 von der Längsachse eines Koppelelementoberteils in der X-Y-Ebene gemäß Fig.1 bezogen ist. Dadurch wird der Justiervorgang, d.h. die Anpassung des Vorrichtungsunterteils 3 an das Vorrichtungsoberteil 2 erleichtert, da die Koppelelementunterteile 6 am Vorrichtungsunterteil 3 nicht vollständig, d.h. nicht auf Zehntel Millimeter genau positioniert werden müssen, um mit ihren korrespondierenden Koppelelementoberteilen 5 koppelbar zu sein. Zudem ermöglicht eine Winkeltoleranz eine Aufnahme eines Objekts 20 wie z.B. eines Spannrahmens 22, auch bei kleineren Winkelabweichungen, die z.B. durch schlechte Positionierung des Spannrahmens 22 auf einem Spannrahmenträger zustande kommen, oder die sich aus Fertigungs- bzw. Bauteiltoleranzen der Kopplungsvorrichtung 1 oder des Spannrahmens 22 ergeben. Diese Toleranzangaben sind natürlich nur beispielhaft zu verstehen, da diese von der Art und Ausführung und insbesondere der Größe der Koppelelemente 4 abhängig ist. Je nach Anwendungsgebiet, erforderlicher Genauigkeit und verfügbarer Standardkomponenten können Koppelelemente 4 mit unterschiedlichen Toleranzen zur Anwendung kommen.

In der Ausführungsform der Kopplungsvorrichtung gemäß Fig.2 ist das Vorrichtungsunterteil 3 an einem Ende des Spannrahmens 22 angeordnet, d.h. in Y-Richtung nicht im Schwerpunkt S des Spannrahmens 22, sondern um einen Abstand yₛ entfernt. Dadurch werden sowohl bei Stillstand des Portalkrans 21 (in der Luft ohne Kontakt des Spannrahmens 22 z.B. an einem Spannrahmenträger) als auch beim Heben/Senken bzw. 1-dimensionaler Bewegung des Portalkrans 21 in Richtung der Z-Achse im Vergleich zu einer zentralen Anordnung des Vorrichtungsunterteils 3 am Spannrahmen 22 hohe Drehmomente Mₓ um die X-Achse in die Kopplungsvorrichtung 1 eingeprägt. Gleiches könnte auch für Drehmomente M_{y} gelten, wenn das Vorrichtungsunterteil 3 in Richtung der X-Achse vom Schwerpunkt S des Spannrahmens 22 entfernt liegen würde (in Fig.2 nicht dargestellt). Wegen der genannten statischen Belastungen durch die Gewichtskraft des Objekts 20 bzw. Spannrahmen 22 und der Belastungen durch 3-dimensionale dynamische Bewegungsvorgänge des Portalkrans 21 ist erfindungsgemäß vorgesehen, dass zumindest zwei Koppelelemente 4 an der Kopplungsvorrichtung 1 vorgesehen sind, insbesondere ist es vorteilhaft wenn mindestens vier Koppelelemente 4 an der Kopplungsvorrichtung 1 vorgesehen sind.

Die erfindungsgemäße Kopplungsvorrichtung 1 ist jedoch nicht auf die Anwendung bei Fügeanlagen gemäß Fig.2 beschränkt, sondern es sind auch alle anderen Anwendungen denkbar, bei denen insbesondere große Lasten bewegt werden und dynamische Bewegungsabläufe durchgeführt werden, z.B. im Bereich des Güterumschlags, etc. Dabei ist die Hebeeinrichtung 19 nicht auf einen Portalkran 21 beschränkt sondern kann als beliebig andere Hebeeinrichtung 19 ausgeführt sein, beispielsweise als Roboter oder jegliche andere Art von Kran.

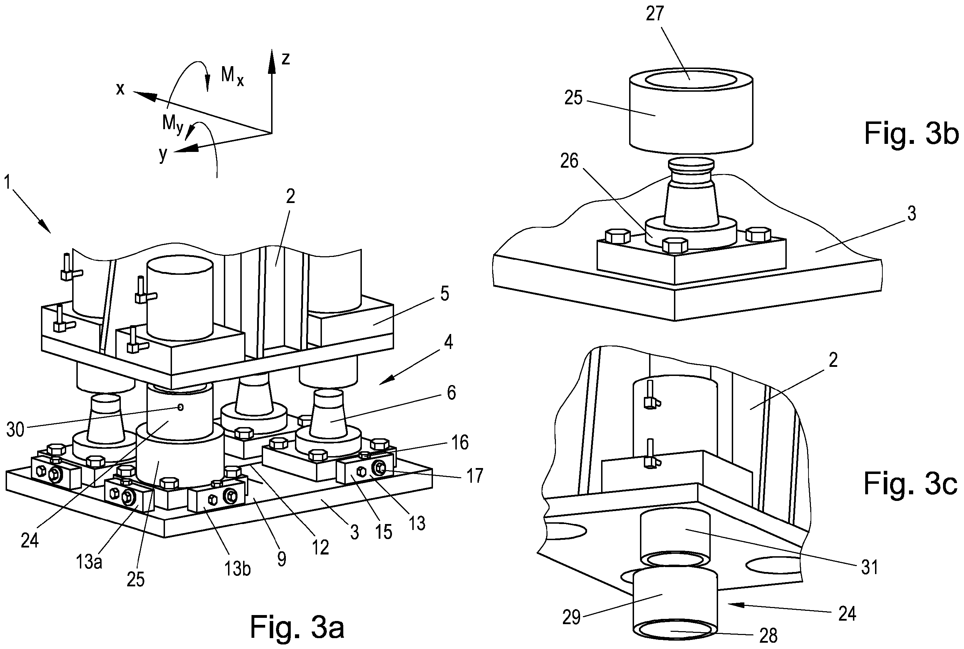

Die Fig.3a bis Fig.3c zeigen ausschnittsweise eine Kopplungsvorrichtung 1 zum Koppeln einer Hebeeinrichtung 19, wie mit Bezugnahme auf die Fig.1 beschrieben, mit einem Objekt 20 bei der Durchführung eines erfindungsgemäßen Justierungs-Verfahrens (Aus Gründen der Übersichtlichkeit sind die Hebeeinrichtung 19, das zu hebende Objekt 20 sowie einige Elemente der Kopplungsvorrichtung nicht dargestellt). Erfindungsgemäß wird zuerst durch Positionierung der Hebeeinrichtung 19 das Vorrichtungsoberteil 2 am Vorrichtungsunterteil 3 vorzentriert, bevorzugterweise erfolgt diese Zentrierung mittels eines, am Vorrichtungsoberteil 2 anordenbaren Zentrierelements 11. Zum Zwecke einer leichteren Zentrierung des Vorrichtungsoberteils 2 am Vorrichtungsunterteil 3 wird die Hebeeinrichtung 19 mit dem daran angeordneten Vorrichtungsoberteils 2 so positioniert, dass das Zentrierelement 11 mit einer am Vorrichtungsunterteil 3 anordenbaren oder vorgesehenen Zentriermarkierung 12 übereinstimmt. Nach erfolgter Zentrierung wird zumindest ein, vorzugsweise jedes, Koppelelementunterteil 6 vom vorrichtungsubterteil 3 gelöst ubd verstellt, sodass jedes Koppelelementunterteil 6 mit dem korrespondierenden Koppelelementoberteil 5 koppelbar ist. Wenn z.B. die Koppelelementunterteile 6 mittels Befestigungselementen 10 wie z.B. Schrauben, am Vorrichtungsunterteil 3 lösbar angeordnet sind, können die Befestigungselemente 10 gelöst werden und die Koppelelementunterteile 6 können entsprechend verstellt werden. Die Verstellung der Koppelelementunterteile 6 kann beispielsweise per Hand erfolgen, bevorzugterweise sind allerdings Verstellelemente 13 zur Verstellung der Koppelelementunterteile 6 am Vorrichtungsunterteil 3 angeordnet. Mit Hilfe dieser Verstellelemente 13 kann eine einfachere, genauere und reproduzierbare Verstellung der Koppelelementunterteile 6 durchgeführt werden. Bevorzugt sind je Koppelelementunterteil 6 zwei Verstellelemente 13 am Vorrichtungsunterteil 3 angeordnet, wobei vorzugsweise ein erstes Verstellelement 13a für die Verstellung des Koppelelementunterteils 6 in eine erste Richtung und ein zweites Verstellelement 13b für die Verstellung des Koppelelementunterteils 6 in eine zweite Richtung am Vorrichtungsunterteil 3 angeordnet sind. Besonders bevorzugt sind die beiden Richtungen, in die ein Koppelelementunterteil 6 verstellbar ist, zwei orthogonal aufeinander stehende Achsen, wie in Fig.3a durch die X-Achse und Y-Achse angedeutet ist. Beispielsweise können zur leichteren Bedienbarkeit auch Betätigungselemente 17 wie z.B. Schrauben in den Verstellelementen 13 vorgesehen sein. Beispielsweise könnte eine axiale Verschiebung eines Koppelelementunterteils 6 durch Verdrehung der Schraube erreicht werden. Es können aber auch z.B. verschiedene Distanzplättchen unterschiedlicher Stärke zwischen den Verstellelementen 13 und den Koppelelementunterteile 6 zur Einstellung der gewünschten Position des Koppelelementunterteils 6 relativ zum Vorrichtungsunterteil 3 angeordnet werden. Verstellelemente 13 und Betätigungselemente 17 können aber auch in beliebig anderen Formen und Kombinationen ausgeführt sein, wichtig ist nur, dass eine möglichst einfache und präzise Verstellung der Koppelelementunterteile 6 erwirkt wird. Nach erfolgter Verstellung eines Koppelelementunterteils 6, wenn also das Koppelelementunterteil 6 in Übereinstimmung mit dem korrespondierenden Koppelelementoberteil 5 gebracht wurde, kann das Koppelelementunterteil 6 wieder am Vorrichtungsunterteil 3 fixiert werden, beispielsweise mit Befestigungselementen 10 wie z.B. Schrauben. Mit diesen einfachen Schritten ist das erfindungsgemäße Justier-Verfahren der Kopplungsvorrichtung 1 abgeschlossen, wodurch ein wiederholbarer und sicherer Kopplungsvorgang gewährleistet wird.

Vorteilhafterweise wird die Kopplungsvorrichtung 1 mittels des erfindungsgemäßen Verfahrens immer dann justiert, wenn ein neues Objekt 20, wie z.B. ein neuer Spannrahmen 22 im Falle einer Fügestation 18, zur Anwendung kommt. Normalerweise wird mit einer Hebeeinrichtung 19 bzw. einem Portalkran 21 nicht nur ein Objekt 20 bzw. Spannrahmen 22 bewegt, sondern eine Vielzahl verschiedener Objekte 20 bzw. Spannrahmen 22. Deshalb kann es notwendig sein, dass ein Vorrichtungsoberteil 2 mit einer Vielzahl von Vorrichtungsunterteilen 3 zusammenwirken kann, die fest an den verschiedenen Objekten 20 bzw. Spannrahmen 22 angeordnet sind. Um einen reproduzierbaren, sicheren Hebeprozess gewährleisten zu können, ist es deshalb wichtig, alle Vorrichtungsunterteile 3 mittels des Justier-Verfahrens zumindest einmal auf das Vorrichtungsoberteil 2 einzustellen, sodass alle Koppelelementunterteile 6 eines Vorrichtungsunterteils 3 mit den Koppelelementoberteilen 5 des Vorrichtungsoberteils 2 sicher und wiederholbar koppelbar sind. Durch das Justier-Verfahren können geringfügige Unterschiede in den Abmessungen der verschiedenen Vorrichtungsunterteile 3 kompensiert werden, die z.B. aufgrund von Bauteil- und Fertigungstoleranzen entstehen. Auch kann es notwendig sein, das Justier-Verfahren dann durchzuführen, wenn z.B. zu Wartungszwecken Bauteile der Kopplungsvorrichtung 1 getauscht werden müssen oder auch nach etwaigen Kollisionen der Hebeeinrichtung 19 bzw. des Portalkrans 21 oder der Kopplungsvorrichtung 1 mit anderen Gegenständen z.B. während eines Produktionsprozesses.

Gemäß einer besonders bevorzugten Variante des erfindungsgemäßen Justier-Verfahrens wird zur Justierung an einem Koppelelementoberteil 5 ein Zentrierhülsenoberteil 24 verschiebbar angeordnet und am zugeordneten verstellbaren Koppelelementunterteil 6 wird ein mit dem Zentrierhülsenoberteil 24 korrespondierender Zentrierhülsenunterteil 25 angeordnet. Nach erfolgter Zentrierung des Vorrichtungsoberteils 2 am Vorrichtungsunterteil 3, beispielsweise wie beschrieben mittels Zentrierelement 11 und Zentriermarkierung 12, wird das Koppelelementunterteil 6 solange verstellt, bis das dazugehörige, am Koppelelementoberteil 5 verschiebbar angeordnete, Zentrierhülsenoberteil 24 allein aufgrund der Schwerkraft in das korrespondierende Zentrierhülsenunterteil 25 gleitet. Die Verstellung des Koppelelementunterteils 6 kann dabei, wie bereits beschrieben, z.B. von Hand oder mittels am Vorrichtungsunterteil 3 angeordneter Verstellelemente 13 durchgeführt werden. Sobald das Zentrierhülsenoberteil 24 in das korrespondierende Zentrierhülsenunterteil 25 geglitten ist, ist eine exakte Zentrierung von Koppelelementoberteil 5 und Koppelelementunterteil 6 erfolgt, worauf das entsprechende Koppelelementunterteil 6 am Vorrichtungsunterteil 3 fixiert wird, beispielsweise mittels Befestigungselementen 10 wie z.B. Schrauben. Damit kann die Anpassung der Koppelelementunterteile 6 an die Koppelelementoberteile 5 wesentlich vereinfacht werden und die Koppelelementunterteile 6 können sehr genau mit ihren korrespondierenden Koppelelementoberteilen 5 in Übereinstimmung gebracht werden. Zur einfacheren Handhabung während der Zentrierung des Vorrichtungsoberteils 2 am Vorrichtungsunterteil 3 kann das Zentrierhülsenoberteil 24 beispielsweise mittels eines Fixierelements 30 am Koppelelementoberteil 5 lösbar fixiert werden, beispielsweise mit einer Klemmschraube, wobei die vorübergehende Fixierung vor der Verstellung des Koppelelementunterteils 6 wieder gelöst wird, sodass das Zentrierhülsenoberteil 24 bei entsprechend genauer Position des Koppelelementunterteils 6 relativ zum Koppelelementoberteil 5 in das Zentrierhülsenunterteil 25 gleiten kann. Die Genauigkeit der Einstellung wird durch das Zusammenspiel von Zentrierhülsenoberteil 24 mit dem korrespondierenden Zentrierhülsenunterteil 25 bestimmt. Bevorzugt werden Zentrierhülsenoberteil 24 und Zentrierhülsenunterteil 25 als zylindrische Hülsen ausgeführt, die auf zylindrische Abschnitte 31 von Koppelelementoberteil 5 bzw. zylindrische Abschnitte 26 Koppelelementunterteil 6 aufgeschoben werden können. Dabei weisen die Zentrierhülsenunterteilinnenfläche 27 sowie der zylindrische Abschnitt 26 des Koppelelementunterteils 6 bevorzugt eine Übergangs-Passung auf und der zylindrische Abschnitt 31 des Koppelelementoberteils 5, die Zentrierhülsenoberteilaußenfläche 29 sowie die Zentrierhülsenoberteilinnenfläche 28 weisen bevorzugt eine Spielpassung auf. Durch diese Toleranzpaarungen kann sowohl ein einfaches Aufschieben des Zentrierhülsenoberteils 24 auf den zylindrischen Abschnitt 31 des Koppelelementoberteils 5 bzw. des Zentrierhülsenunterteils 25 auf den zylindrischen Abschnitt 26 des Koppelelementunterteils 6, als auch ein Gleiten des Zentrierhülsenoberteils 24 in das Zentrierhülsenunterteil 25 ermöglicht werden und es kann eine sehr genaue Justierung der Koppelelemente 4 erreicht werden. Es wären aber natürlich auch andere Ausführungsformen, Toleranzpaarungen und Materialien denkbar, z.B. könnte ein größeres Spiel zwischen Zentrierhülsenoberteil 24 und Zentrierhülsenunterteil 25 in Kauf genommen werden, wenn keine hochpräzise Justierung erforderlich ist.

## Patentansprüche

1. Kopplungsvorrichtung (1) mit zumindest einem Vorrichtungsoberteil (2) und zumindest einem Vorrichtungsunterteil (3), wobei das Vorrichtungsoberteil (2) und das Vorrichtungsunterteil (3) voneinander lösbar koppelbar sind, **dadurch gekennzeichnet, dass** die Kopplungsvorrichtung (1) mindestens zwei, vorzugsweise mindestens vier Koppelelemente (4) mit jeweils einem Koppelelementoberteil (5) und einem Koppelelementunterteil (6) aufweist, wobei die zumindest zwei Koppelelementoberteile (5) ortsfest am Vorrichtungsoberteil (2) angeordnet sind und die zumindest zwei Koppelelementunterteile (6) am Vorrichtungsunterteil (3) angeordnet sind, wobei zumindest ein Koppelelementunterteil (6) relativ zum Vorrichtungsunterteil (3) verstellbar und lösbar am Vorrichtungsunterteil (3) angeordnet ist.

2. Vorrichtung nach Anspruch 1 , **dadurch gekennzeichnet, dass** die Koppelelemente (4) pneumatisch, elektrisch oder hydraulisch betätigbar sind.

3. Vorrichtung nach Anspruch 1 oder 2, **dadurch gekennzeichnet, dass** am Vorrichtungsoberteil (2) ein Zentrierelement (11) angeordnet ist und am Vorrichtungsunterteil (3) eine Zentriermarkierung (12) vorgesehen ist, wobei das Zentrierelement (11) und Zentriermarkierung (12) zur Zentrierung des Vorrichtungsoberteils (2) am Vorrichtungsunterteil (3) zusammenwirken.

4. Vorrichtung nach Anspruch 1 bis 3, **dadurch gekennzeichnet, dass** am Vorrichtungsunterteil (3) zumindest ein Verstellelement (13) zur Verstellung des zumindest einen verstellbaren Koppelelementunterteils (6) angeordnet ist.

5. Hebeanordnung mit einer Hebeeinrichtung (19) und einem zu hebenden Objekt (20), wobei eine Kopplungsvorrichtung (1) zum Koppeln der Hebeeinrichtung (19) mit dem zu hebenden Objekt (20) nach Anspruch 1 vorgesehen ist, wobei das Vorrichtungsoberteil (2) ortsfest an der Hebeeinrichtung (19) angeordnet ist und das Vorrichtungsunterteil (3) ortsfest an dem zu hebenden Objekt (20), oder umgekehrt, angeordnet ist.

6. Hebeanordnung nach Anspruch 5, **dadurch gekennzeichnet, dass** die Hebeeinrichtung (19) ein Kran, insbesondere ein Portalkran (21) ist.

7. Hebeanordnung nach Anspruch 5 bis 6, **dadurch gekennzeichnet, dass** das Objekt ein Spannrahmen (22) ist.

8. Hebeanordnung nach Anspruch 5 bis7, **dadurch gekennzeichnet, dass** die Koppelelemente (4) pneumatisch, elektrisch oder hydraulisch betätigbar sind.

9. Hebeanordnung nach Anspruch 5 bis 8, **dadurch gekennzeichnet, dass** das Vorrichtungsoberteil (2) ein Zentrierelement (11) aufweist und das Vorrichtungsunterteil (3) eine Zentriermarkierung (12) aufweist, wobei das Zentrierelement (11) und die Zentriermarkierung (12) zur Zentrierung des Vorrichtungsoberteils (2) am Vorrichtungsunterteil (3) zusammenwirken.

10. Hebeanordnung nach Anspruch 5 bis 9, **dadurch gekennzeichnet, dass** am Vorrichtungsunterteil (3) zumindest ein Verstellelement (13) zur Verstellung des zumindest einen verstellbaren Koppelelementunterteils (6) angeordnet ist.

11. Verfahren zur Justierung einer Kopplungsvorrichtung (1) mit zumindest einem Vorrichtungsoberteil (2) und zumindest einem Vorrichtungsunterteil (3), wobei Vorrichtungsoberteil (2) und Vorrichtungsunterteil (3) lösbar voneinander koppelbar sind, **dadurch gekennzeichnet, dass** die Kopplungsvorrichtung (1) mindestens zwei Koppelelemente (4) mit jeweils einem Koppelelementoberteil (5) und einem Koppelelementunterteil (6) aufweist, wobei die zumindest zwei Koppelelementoberteile (5) ortsfest am Vorrichtungsoberteil (2) angeordnet sind und die zumindest zwei Koppelelementunterteile (6) am Vorrichtungsunterteil (3) angeordnet sind, wobei zumindest ein Koppelelementunterteil (6) relativ zum Vorrichtungsunterteil (3) verstellbar und lösbar am Vorrichtungsunterteil (3) angeordnet ist und dass zuerst das Vorrichtungsoberteil (2) am Vorrichtungsunterteil (3) zentriert wird, worauf das zumindest eine verstellbare Koppelelementunterteil (6) vom Vorrichtungsunterteil (3) gelöst wird und verstellt wird, sodass das zumindest eine verstellbare Koppelelementunterteil (6) mit dem korrespondierenden Koppelelementoberteil (5) koppelbar ist, worauf das zumindest eine verstellbare Koppelelementunterteil (6) am Vorrichtungsunterteil (3) fixiert wird.

12. Verfahren nach Anspruch 11, **dadurch gekennzeichnet, dass** das Vorrichtungsoberteil (2) mittels eines am Vorrichtungsoberteil (2) anordenbaren Zentrierelements (11) auf einer am Vorrichtungsunterteil (3) angeordneten Zentriermarkierung (12) zentriert wird.

13. Verfahren nach Anspruch 11 bis 12, **dadurch gekennzeichnet, dass** das zumindest eine verstellbare Koppelelementunterteil (6) mittels zumindest eines am Vorrichtungsunterteil (3) angeordneten Verstellelements (13) verstellt wird.

14. Verfahren nach Anspruch 11 bis 13, **dadurch gekennzeichnet, dass** an zumindest einem Koppelelementoberteil (5) ein Zentrierhülsenoberteil (24) verschiebbar angeordnet wird und am zumindest einen korrespondierenden Koppelelementunterteil (6) ein mit dem Zentrierhülsenoberteil (24) korrespondierender Zentrierhülsenunterteil (25) angeordnet wird und dass das zumindest eine verstellbare Koppelelementunterteil (6) solange verstellt wird, bis das Zentrierhülsenoberteil (24) allein aufgrund der Schwerkraft in das korrespondierende Zentrierhülsenunterteil (25) gleitet.

15. Verfahren nach Anspruch 11 bis 14, **dadurch gekennzeichnet, dass** das Vorrichtungsoberteil (2) ortsfest an einer Hebeeinrichtung (19), insbesondere einem Portalkran (21) angeordnet wird und das Vorrichtungsunterteil (3) ortsfest an einem Objekt (20), insbesondere an einem Spannrahmen (22) angeordnet wird.

## Claims

1. Coupling device (1) comprising at least one device upper part (2) and at least one device lower part (3), it being possible to couple the device upper part (2) and the device lower part (3) so as to be detachable from one another, **characterized in that** the coupling device (1) has at least two, preferably at least four coupling elements (4) each comprising a coupling element upper part (5) and a coupling element lower part (6), the at least two coupling element upper parts (5) being immovably arranged on the device upper part (2) and the at least two coupling element lower parts (6) being arranged on the device lower part (3), at least one coupling element lower part (6) being adjustable relative to the device lower part (3) and being detachably arranged on the device lower part (3).

2. Device according to claim 1, **characterized in that** the coupling elements (4) can be actuated pneumatically, electrically or hydraulically.

3. Device according to either claim 1 or claim 2, **characterized in that** a centering element (11) is arranged on the device upper part (2) and a centering marker (12) is provided on the device lower part (3), the centering element (11) and the centering marker (12) interacting in order to center the device upper part (2) on the device lower part (3).

4. Device according to claims 1 to 3, **characterized in that** at least one adjusting element (13) for adjusting the at least one adjustable coupling element lower part (6) is arranged on the device lower part (3).

5. Lifting assembly comprising a lifting apparatus (19) and an object (20) to be lifted, a coupling device (1) according to claim 1 being provided for coupling the lifting apparatus (19) to the object (20) to be lifted, the device upper part (2) being immovably arranged on the lifting apparatus (19) and the device lower part (3) being immovably arranged on the object (20) to be lifted, or vice versa.

6. Lifting assembly according to claim 5, **characterized in that** the lifting apparatus (19) is a crane, in particular a gantry crane (21).

7. Lifting assembly according to claims 5 to 6, **characterized in that** the object is a clamping frame (22).

8. Lifting assembly according to claims 5 to 7, **characterized in that** the coupling elements (4) can be actuated pneumatically, electrically or hydraulically.

9. Lifting assembly according to claims 5 to 8, **characterized in that** the device upper part (2) has a centering element (11) and the device lower part (3) has a centering marker (12), the centering element (11) and the centering marker (12) interacting in order to center the device upper part (2) on the device lower part (3).

10. Lifting assembly according to claims 5 to 9, **characterized in that** at least one adjusting element (13) for adjusting the at least one adjustable coupling element lower part (6) is arranged on the device lower part (3).

11. Method for aligning a coupling device (1) comprising at least one device upper part (2) and at least one device lower part (3), it being possible to couple the device upper part (2) and the device lower part (3) so as to be detachable from one another, **characterized in that** the coupling device (1) has at least two coupling elements (4) each comprising a coupling element upper part (5) and a coupling element lower part (6), the at least two coupling element upper parts (5) being immovably arranged on the device upper part (2) and the at least two coupling element lower parts (6) being arranged on the device lower part (3), at least one coupling element lower part (6) being adjustable relative to the device lower part (3) and being detachably arranged on the device lower part (3), and **in that** the device upper part (2) is firstly centered on the device lower part (3), whereupon the at least one adjustable coupling element lower part (6) is detached from the device lower part (3) and adjusted, such that the at least one adjustable coupling element lower part (6) can be coupled to the corresponding coupling element upper part (5), whereupon the at least one adjustable coupling element lower part (6) is fixed on the device lower part (3).

12. Method according to claim 11, **characterized in that** the device upper part (2) is centered on a centering marker (12) arranged on the device lower part (3) by means of a centering element (11) which can be arranged on the device upper part (2).

13. Method according to claims 11 to 12, **characterized in that** the at least one adjustable coupling element lower part (6) is adjusted by means of at least one adjusting element (13) arranged on the device lower part (3).

14. Method according to claims 11 to 13, **characterized in that** a centering sleeve upper part (24) is movably arranged on at least one coupling element upper part (5) and a centering sleeve lower part (25) corresponding to the centering sleeve upper part (24) is arranged on at least one corresponding coupling element lower part (6), and **in that** the at least one adjustable coupling element lower part (6) is adjusted until the centering sleeve upper part (24) slides into the corresponding centering sleeve lower part (25) solely due to gravity.

15. Method according to claims 11 to 14, **characterized in that** the device upper part (2) is immovably arranged on a lifting apparatus (19), in particular a gantry crane (21), and the device lower part (3) is immovably arranged on an object (20), in particular on a clamping frame (22).

## Revendications

1. Dispositif d'accouplement (1) comportant au moins une partie supérieure de dispositif (2) et au moins une partie inférieure de dispositif (3), la partie supérieure de dispositif (2) et la partie inférieure de dispositif (3) pouvant être accouplées l'une à l'autre de manière amovible, **caractérisé en ce que** le dispositif d'accouplement (1) présente au moins deux, de préférence au moins quatre éléments d'accouplement (4) comportant respectivement une partie supérieure d'élément d'accouplement (5) et une partie inférieure d'élément d'accouplement (6), les au moins deux parties supérieures d'élément d'accouplement (5) étant disposées de manière fixe sur la partie supérieure de dispositif (2) et les au moins deux parties inférieures d'élément d'accouplement (6) étant disposées sur la partie inférieure de dispositif (3), au moins une partie inférieure d'élément d'accouplement (6) étant disposée sur la partie inférieure de dispositif (3) de manière réglable et amovible par rapport à la partie inférieure de dispositif (3).

2. Dispositif selon la revendication 1, **caractérisé en ce que** les éléments d'accouplement (4) peuvent être actionnés pneumatiquement, électriquement ou hydrauliquement.

3. Dispositif selon la revendication 1 ou 2, **caractérisé en ce qu'**un élément de centrage (11) est disposé sur la partie supérieure de dispositif (2) et une marque de centrage (12) est prévue sur la partie inférieure de dispositif (3), l'élément de centrage (11) et la marque de centrage (12) coopérant sur la partie inférieure de dispositif (3) pour le centrage de la partie supérieure de dispositif (2).

4. Dispositif selon les revendications 1 à 3, **caractérisé en ce qu'**au moins un élément de réglage (13) est disposé sur la partie inférieure de dispositif (3) pour le réglage de l'au moins une partie inférieure d'élément d'accouplement réglable (6).

5. Ensemble de levage comportant un système de levage (19) et un objet (20) à soulever, un dispositif d'accouplement (1) destiné à accoupler le système de levage (19) à l'objet (20) à soulever selon la revendication 1 étant prévu, la partie supérieure de dispositif (2) étant disposée de manière fixe sur le système de levage (19) et la partie inférieure de dispositif (3) étant disposée de manière fixe sur l'objet (20) à soulever, ou vice versa.

6. Ensemble de levage selon la revendication 5, **caractérisé en ce que** le système de levage (19) est une grue, en particulier une grue à portique (21).

7. Ensemble de levage selon les revendications 5 à 6, **caractérisé en ce que** l'objet est un cadre de serrage (22).

8. Ensemble de levage selon les revendications 5 à 7, **caractérisé en ce que** les éléments d'accouplement (4) peuvent être actionnés pneumatiquement, électriquement ou hydrauliquement.

9. Ensemble de levage selon les revendications 5 à 8, **caractérisé en ce que** la partie supérieure de dispositif (2) présente un élément de centrage (11) et la partie inférieure de dispositif (3) présente une marque de centrage (12), l'élément de centrage (11) et la marque de centrage (12) coopérant sur la partie inférieure de dispositif (3) pour le centrage de la partie supérieure de dispositif (2).

10. Ensemble de levage selon les revendications 5 à 9, **caractérisé en ce qu'**au moins un élément de réglage (13) destiné au réglage de l'au moins une partie inférieure d'élément d'accouplement réglable (6) est disposé sur la partie inférieure de dispositif (3).

11. Procédé d'ajustement d'un dispositif d'accouplement (1) comportant au moins une partie supérieure de dispositif (2) et au moins une partie inférieure de dispositif (3), la partie supérieure de dispositif (2) et la partie inférieure de dispositif (3) pouvant être accouplées l'une à l'autre de manière amovible, **caractérisé en ce que** le dispositif d'accouplement (1) présente au moins deux éléments d'accouplement (4) comportant respectivement une partie supérieure d'élément d'accouplement (5) et une partie inférieure d'élément d'accouplement (6), les au moins deux parties supérieures d'élément d'accouplement (5) étant disposées de manière fixe sur la partie supérieure de dispositif (2) et les au moins deux parties inférieures d'élément d'accouplement (6) étant disposées sur la partie inférieure de dispositif (3), au moins une partie inférieure d'élément d'accouplement (6) étant disposée sur la partie inférieure de dispositif (3) de manière réglable et amovible par rapport à la partie inférieure de dispositif (3), et **en ce que** la partie supérieure de dispositif (2) est d'abord centrée sur la partie inférieure de dispositif (3), puis l'au moins une partie inférieure d'élément d'accouplement réglable (6) est détachée et réglée par rapport à la partie inférieure de dispositif (3), de sorte que l'au moins une partie inférieure d'élément d'accouplement réglable (6) peut être accouplée à la partie supérieure d'élément d'accouplement (5) correspondante, puis l'au moins une partie inférieure d'élément d'accouplement réglable (6) est fixée sur la partie inférieure de dispositif (3).

12. Procédé selon la revendication 11, **caractérisé en ce que** la partie supérieure de dispositif (2) est centrée sur une marque de centrage (12) disposée sur la partie inférieure de dispositif (3) au moyen d'un élément de centrage (11) pouvant être disposé sur la partie supérieure de dispositif (2).

13. Procédé selon les revendications 11 à 12, **caractérisé en ce que** l'au moins une partie inférieure d'élément d'accouplement réglable (6) est réglée au moyen d'au moins un élément de réglage (13) disposé sur la partie inférieure de dispositif (3).

14. Procédé selon les revendications 11 à 13, **caractérisé en ce qu'**une partie supérieure de manchon de centrage (24) est disposée de manière coulissante sur au moins une partie supérieure d'élément d'accouplement (5) et une partie inférieure de manchon de centrage (25) correspondant à la partie supérieure de manchon de centrage (24) est disposée sur au moins une partie inférieure d'élément d'accouplement correspondante (6) et **en ce que** l'au moins une partie inférieure d'élément d'accouplement réglable (6) est réglée jusqu'à ce que la partie supérieure de manchon de centrage (24) glisse dans la partie inférieure de manchon de centrage correspondante (25) uniquement grâce à la gravité.

15. Procédé selon les revendications 11 à 14, **caractérisé en ce que** la partie supérieure de dispositif (2) est disposée de manière fixe sur un système de levage (19), en particulier une grue à portique (21), et la partie inférieure de dispositif (3) est disposée de manière fixe sur un objet (20), en particulier sur un cadre de serrage (22).
